# EUROPÄISCHE PATENTSCHRIFT

(11) **EP 1 861 447 B1**
(45) Veröffentlichungstag und Bekanntmachung des Hinweises auf die Patenterteilung: **04.11.2009**
(21) Anmeldenummer: 06707869.1
(22) Anmeldetag: 27.01.2006
(51) Int. Cl.: C08G 18/79, C08G 18/22, C08G 18/32

(54) **NIEDRIGVISKOSE URETDIONGRUPPENHALTIGE POLYADDITIONSVERBINDUNGEN, VERFAHREN ZUR HERSTELLUNG UND VERWENDUNG**
LOW-VISCOSITY URETDION GROUP-CONTAINING POLYADDITION COMPOUNDS, METHOD OF PRODUCTION AND USE THEREOF
COMPOSES DE POLYADDITION A FAIBLE VISCOSITE CONTENANT DES GROUPES URETDIONE, PROCEDE POUR LEUR PRODUCTION ET LEUR UTILISATION

(30) Priorität: 23.03.2005 DE 102005013329
(43) Veröffentlichungstag der Anmeldung: 05.12.2007
(73) Patentinhaber: Evonik Degussa GmbH, 45128 Essen (DE)
(72) Erfinder: SPYROU, Emmanouil, 46514 Haltern Am See (DE); WEIHRAUCH, Thomas, 48249 Dülmen (DE); MINDACH, Lutz, 45770 Marl (DE)
(86) Internationale Anmeldenummer: PCT/EP2006/050485
(87) Internationale Veröffentlichungsnummer: WO 2006/100144

(56) Entgegenhaltungen:
- EP-A- 0 269 943
- EP-A- 0 803 524
- EP-A- 1 231 232
- WO-A-99/11690
- WO-A-2004/056903
- US-A1- 2004 197 481

## Beschreibung

Die Erfindung betrifft niedrigviskose uretdiongruppenhaltige Polyadditionsverbindungen, Verfahren zur Herstellung und Verwendung.

Uretdiongruppenhaltige Polyadditionsverbindungen sind bekannt.

In DE 101 470 werden Reaktionsprodukte aus aromatischen uretdiongruppenhaltigen Diisocyanaten und difunktionellen Hydroxylverbindungen beschrieben.

In DE 952 940, DE 968 566 und DE 11 53 900 werden Reaktionsprodukte aus Diisocyanaten, uretdiongruppenhaltigen Diisocyanaten und difunktionellen Hydroxyl-verbindungen beschrieben.

DE 20 44 838 beansprucht die Weiterreaktion von uretdiongruppenhaltigen Polyurethanzusammensetzungen mit Polyaminen.

Die DE 22 21 170 beschreibt die Umsetzung von NCO-terminierten uretdiongruppenhaltigen Polyurethanzusammensetzungen mit Diaminen unter Beibehaltung der Uretdiongruppen.

DE 24 20 475 enthält die Beschreibung eines Verfahrens zur Herstellung von Pulverlackvernetzern, die aus uretdiongruppenhaltigen Diisocyanaten, Diisocyanaten und difunktionellen Hydroxylverbindungen bestehen.

In US 4,496,684 werden Reaktionsprodukte aus uretdiongruppenhaltigen Diisocyanaten und difunktionellen Hydroxylverbindungen erwähnt, die dann nachfolgend mit Säureanhydriden vernetzt werden sollen.

Ein Verfahren zur Herstellung von uretdiongruppenhaltigen Polyadditionsverbindungen wird in EP 269 943 beschrieben.

In EP 601 793 werden Einkomponenten Kleber beschrieben aus uretdiongruppenhaltigen Polyisocyanaten, Polyisocyanaten und Polyolen.

EP 640 634 beschreibt uretdiongruppenhaltige Polyadditionsverbindungen die zusätzlich noch Isocyanuratgruppen enthalten.

In der EP 1 063 251 wird ein Verfahren zu Herstellung von uretdiongruppenhaltigen Polyadditionsverbindungen beschrieben. Dabei werden uretdiongruppenhaltige Polyisocyanate und Diisocyanate gemischt.

Allen diesen Herstellverfahren und Produkten ist gemeinsam, dass während der lösemittelfreien Herstellung bei höheren Temperaturen (> 50 °C) der Einsatz von üblichen Katalysatoren, z. B. Dibutylzinndilaurat (DBTL), zur Beschleunigung der Reaktion, zu unerwünschten Nebenreaktionen (Allophanate) führt. Die dabei gebildeten Allophanate erhöhen die Schmelzviskosität der entstehenden uretdiongruppenhaltigen Polyadditionsverbindungen, gleichzeitig wird wertvolles reaktives Uretdion vernichtet. Die Erhöhung der Schmelzviskosität beeinträchtigt die Verarbeitbarkeit solcher Systeme, z. B. im Einsatz als Pulverlackhärter. Hoch viskose Pulverlackhärter lassen sich schlechter mit anderen Pulverlackbestandteilen vermischen und führen auf der Lackoberfläche zu Störungen durch einen unzureichenden Verlauf.

Aufgabe dieser Erfindung war es, uretdiongruppenhaltige Polyadditionsverbindungen zu finden, die deutlich geringere Schmelzviskositäten aufweisen sowie ein Verfahren zu ihrer Herstellung.

Überraschend wurde gefunden, dass die erfindungsgemäßen Katalysatoren bei der lösemittelfreien Herstellung bei Temperaturen über 50 °C von uretdiongruppenhaltigen Polyadditionsverbindungen zu deutlich geringeren Schmelzviskositäten führen. Deutlich verringert bedeutet, dass die Schmelzviskosität des entstehenden Produktes im Vergleich zu dem konventionell eingesetzten Dibutylzinndilaurat bei sonst gleichen Bedingungen (Reaktionstemperaturen und -zeiten) um mindestens 50 % gesunken ist. Die Schmelzviskosität ist abhängig von der Glasübergangstemperatur. Es gibt markterhältliche Produkte mit niedrigem Tg (40 - 50 °C) (Viskosität 30 - 300 Pas bei 120 °C) sowie Produkte mit hohem Tg (70 - 80°C) (Viskosität 3000 - 18000 Pas bei 120 °C). Die Grundviskosität dieser Produkte unterscheidet sich bereits drastisch. Dennoch ist im Vergleich mit der herkömmlichen Herstellweise in jedem Fall mit einer deutlichen Abnahme der Schmelzviskosität zu rechnen.

Gegenstand der Erfindung sind niedrigviskose, uretdiongruppenhaltige Polyadditionsverbindungen erhalten durch lösemittelfreie Umsetzung bei Temperaturen oberhalb von 50°C von
A) mindestens einem aliphatischen, (cyclo-)aliphatischen und/oder cycloaliphatischen uretdiongrupppenhaltigen Polyisocyanat mit mindestens zwei NCO-Gruppen und
B) mindestens einem monomeren, oligomeren und/oder polymeren Polyol mit mindestens zwei OH-Gruppen;
C) in Gegenwart von organischen Bismutverbindungen der Zusammensetzung RₙBiXₘ (I) in welcher R = Alkylrest mit 1 bis 10 Kohlenstoffatomen und X = Carboxylatrest einer Monocarbonsäure mit 1 bis 20 Kohlenstoffatomen bedeuten und n = 0 - 2; m = 1 - 3 und n + m = 3 ist;
   in einer Konzentration von 0,001 bis 3 % bezogen auf die Gesamtmasse;
D) und optional weitere Monoalkohole, Monoamine, Diamine ausgewählt aus Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin, und/oder Blockierungsmittel;
E) und/oder optional weitere aromatische, aliphatische, (cyclo-)aliphatischen und/oder cycloaliphatische Polyisocyanate;
wobei weitere Hilfs- und Zusatzstoffe enthalten sein können.

Die erfindungsgemäßen niedrigviskosen uretdiongruppenhaltigen Polyadditionsverbindungen besitzen im Allgemeinen Viskositäten, welche 50 % geringer sind, als bei bisher bekannten Produkten, normalerweise im Bereich von 30 Pas (Tg 40 °C) bis 18000 Pas (Tg 80 °C), jeweils bei 120 °C gemessen.

Ausgangstoffe für die uretdiongruppenhaltigen Polyisocyanate A) sind aliphatische, (cyclo-)aliphatische und/oder cycloaliphatische Polyisocyanate mit mindestens zwei NCO-Gruppen geeignet, insbesondere: Isophorondiisocyanat (IPDI), Hexamethylendiisocyanat (HDI), Diisocyanatodicylcohexylmethan (H₁₂MDI) 2-Methylpentandiisocyanat (MPDI), 2,2,4-Trimethylhexamethylendiisocyanat/2,4,4-Trimethylhexamethylendiisocyanat (TMDI), Norbomandiisocyanat (NBDI), bevorzugt verwendet. Ganz besonders bevorzugt werden IPDI, HDI und H₁₂MDI.

Uretdiongruppen enthaltende Polyisocyanate sind wohlbekannt und werden beispielsweise in US 4,476,054, US 4,912,210, US 4,929,724 sowie EP 417 603 beschrieben. Einen umfassenden Überblick über industriell relevante Verfahren zur Dimerisierung von Isocyanaten zu Uretdionen liefert das J. Prakt. Chem. 336 (1994) 185 - 200. Im Allgemeinen erfolgt die Umsetzung von Isocyanaten zu Uretdionen in Gegenwart löslicher Dimerisierungskatalysatoren, wie z. B. Dialkylaminopyridinen, Trialkylphosphinen, Phosphorigsäure-triamiden, Triazolderivaten oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden.

Die Dimerisierung von H₁₂MDI ist erst kürzlich in WO 04005363 und WO 04005364 beschrieben worden.

Als Verbindungen B) eignen sich alle in der PUR-Chemie üblicherweise eingesetzten Polyole (Polyole sind alle Verbindungen die mindestens zwei Alkoholgruppen aufweisen) des Molekulargewichtes von mindestens 32.

Bei den monomeren Diolen handelt es sich beispielweise um Ethylenglykol, Triethylenglykol, Butandiol-1,4, Pentandiol-1,5, Hexandiol-1,6, 3-Methylpentandiol-1,5, Neopentylglykol, 2,2,4 (2,4,4)-Trimethylhexandiol sowie Hydroxypivalinsäureneopentylglykolester.

Bei den monomeren Triolen handelt es sich beispielweise um Trimethylolpropan, Ditrimethylolpropan, Trimethylolethan, Hexantriol-1,2,6, Butantriol-1,2,4, Tris(β-Hydroxyethyl)-isocyanurat Pentaerythrit, Mannit oder Sorbit.

Es eignen sich auch Polyole, die weitere funktionelle Gruppen enthalten (Oligomere oder Polymere). Hierbei handelt es sich um die an sich bekannten hydroxylgruppenhaltigen Polyester, Polycarbonate, Polycaprolactone, Polyether, Polythioether, Polyesteramide, Polyurethane oder Polyacetale. Sie besitzen ein zahlenmittleres Molekulargewicht von 134 bis 3 500.

Die Polyole werden allein oder in Mischungen verwendet.

Bei den Katalysatoren C) handelt es sich um organische Bismutverbindungen der Zusammensetzung RₙBiXₘ, (I),
in welcher R = Alkylrest mit 1 bis 10 Kohlenstoffatomen und X = Carboxylatrest einer Monocarbonsäure mit 1 bis 20 Kohlenstoffatomen bedeuten und n=0-2; m=1-3 und n+m=3 ist;

Als Katalysator kommt in Frage z. B. Bismuttris(neodecanoat). Dieser Katalysator kann optional in einer Carbonsäure gelöst eingesetzt werden. Z.B wird Bismuttris(neodecanoat) in der Regel in überschüssiger Neodecansäure gelöst und als COSCAT 83 (Erbslöh) verkauft. für NCO-Gruppen kommen alle gängigen, bei Temperaturen unterhalb von 200 °C wieder abspaltbaren Verbindungen in Frage, wie z. B. Methylethylketoxim, Acetonoxim, Phenol, ε-Caprolactam, 1,2,4-Triazol, 2,5-Dimethylpyrazol, Malonsäurediethylester, Acetessigsäureethylester oder Diisopropylamin.

Als Polyisocyanate E) sind aromatische, aliphatisch, (cyclo-)aliphatische und/oder cycloaliphatische Polyisocyanate mit mindestens zwei NCO-Gruppen geeignet, insbesondere: Isophorondiisocyanat (IPDI), Hexamethylendiisocyanat (HDI), Diisocyanatodicylcohexylmethan (H₁₂MDI) 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI), Toluidendiisocyanat (TDI), und/oder Methylendiphenyldiisocyanat (MDI) sowie auch Tetramethylxylylendiisocyanat (TMXDI) bevorzugt verwendet. Ganz besonders bevorzugt werden IPDI, HDI und H₁₂MDI. Außerdem können die Polyisocyanate E) noch weitere funktionale Gruppen enthalten wie z. B. Isocyanurate, Biurete oder Allophanate.

Die Umsetzung der der Uretdiongruppen tragenden Polyisocyanate A) und gegebenenfalls Polyisocyanate E) zu den erfindungsgemäßen Polyadditionsverbindungen beinhaltet die Reaktion der freien NCO-Gruppen von A) und gegebenenfalls E) mit aktiven Wasserstoff tragenden Verbindungen von B) und gegebenenfalls D).

Gegenstand der Erfindung ist auch ein Verfahren zur lösemittelfreien, kontinuierlichen Herstellung von niedrigviskosen, uretdiongruppenhaltigen Polyadditionsverbindungen erhalten durch lösemittelfreie Umsetzung bei Temperaturen oberhalb von 50 °C von
A) mindestens einem aliphatischen, (cyclo-)aliphatischen und/oder cycloaliphatischen uretdiongrupppenhaltigen Polyisocyanat mit mindestens zwei NCO-Gruppen und
B) mindestens einem monomeren, oligomeren und/oder polymeren Polyol mit mindestens zwei OH-Gruppen;
C) in Gegenwart von organischen Bismutverbindungen der Zusammensetzung RₙBiXₘ (I) in welcher R = Alkylrest mit 1 bis 10 Kohlenstoffatomen und X = Carboxylatrest einer Monocarbonsäure mit 1 bis 20 Kohlenstoffatomen bedeuten und n = 0 - 2; m = 1 - 3 und n + m = 3 ist;
   in einer Konzentration von 0,001 bis 3 % bezogen auf die Gesamtmasse;
D) und optional weitere Monoalkohole, Monoamine, Diamine ausgewählt aus Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin, und/oder Blockierungsmittel;
E) und/oder optional weitere aromatische, aliphatische, (cyclo-)aliphatischen und/oder cycloaliphatische Polyisocyanate;
wobei weitere Hilfs- und Zusatzstoffe enthalten sein können,
in einem Extruder, Strömungsrohr, Intensiv-Kneter, Intensiv-Mischer oder statischen Mischer durch intensive Durchmischung und kurzzeitiger Reaktion bei Wärmezufuhr bei Temperaturen > 50 °C und nachfolgender Isolierung des Endproduktes durch schnelle Abkühlung.

Das Prinzip des Verfahrens besteht darin, dass die Umsetzung der Ausgangsverbindungen kontinuierlich insbesondere in einem Extruder, Strömungsrohr, Intensiv-Kneter, Intensiv-Mischer oder statischen Mischer durch intensive Durchmischung und kurzzeitige Reaktion bei Wärmezufuhr erfolgt. Dies bedeutet, dass die Verweilzeit der Einsatzstoffe in den oben genannten Aggregaten üblicherweise 3 Sekunden bis 15 Minuten, bevorzugt 3 Sekunden bis 5 Minuten, besonders bevorzugt 5 bis 180 Sekunden beträgt. Die Reaktanden werden dabei kurzzeitig unter Wärmezufuhr bei Temperaturen von 50 °C bis 325 °C, bevorzugt von 50 bis 250 °C, ganz besonders bevorzugt von 70 bis 220 °C zur Reaktion gebracht. Je nach Art der Einsatzstoffe und der Endprodukte können diese Werte für Verweilzeit und Temperatur jedoch auch andere bevorzugte Bereiche einnehmen. Gegebenenfalls wird eine kontinuierliche Nachreaktion nachgeschaltet. Durch anschließende schnelle Abkühlung gelingt es dann, das Endprodukt zu erhalten.

Als Aggregate sind Extruder wie Ein- oder Mehrschneckenextruder, insbesondere Zweischneckenextruder, Planetwalzenextruder oder Ringextruder, Strömungsrohre, Intensiv-Kneter, Intensiv-Mischer, oder statische Mischer für das erfindungsgemäße Verfahren besonders geeignet und werden bevorzugt verwendet.

Die Ausgangsverbindungen werden den Aggregaten in der Regel in getrennten Produktströmen zudosiert. Bei mehr als zwei Produktströmen können diese auch gebündelt zugeführt werden. Verschiedene hydroxylgruppenhaltige Ausgangsstoffe können zu einem Produktstrom zusammengefasst werden. Es ist auch möglich, diesem Produktstrom zusätzlich Katalysatoren und/oder Zuschlagstoffe wie Verlaufmittel, oder Stabilisatoren zuzufügen. Ebenso können Polyisocyanate sowie das- oder die Uretdione von Polyisocyanaten, mit Katalysatoren und/oder Zuschlagstoffen wie Verlaufmittel oder Stabilisatoren in einem Produktstrom zusammengefasst werden. Die Stoffströme können auch geteilt werden und so in unterschiedlichen Anteilen an verschiedenen Stellen den Aggregaten zugeführt werden. Auf diese Weise werden gezielt Konzentrationsgradienten eingestellt, was die Vollständigkeit der Reaktion herbeiführen kann. Die Eintrittsstelle der Produktströme in der Reihenfolge kann variable und zeitlich versetzt gehandhabt werden.

Zur Vorreaktion und/oder Vervollständigung der Reaktion können mehrere Aggregate auch kombiniert werden.

Die der schnellen Reaktion nachgeschaltete Abkühlung kann in dem Reaktionsteil integriert sein, in Form einer mehrgehäusigen Ausführungsform wie bei Extrudern oder Conterna-Maschinen. Eingesetzt werden können außerdem: Rohrbündel, Rohrschlangen, Kühlwalzen, Luftförderer, Transportbänder aus Metall und Wasserbäder, mit- und ohne nachgeschaltetem Granulator.

Die Konfektionierung wird je nach Viskosität des den Intensivkneter- oder die Nachreaktionszone verlassenden Produktes zunächst durch weitere Abkühlung mittels entsprechender vorgenannter Gerätschaften auf eine geeignete Temperatur gebracht. Dann erfolgt die Pastillierung oder aber eine Zerkleinerung in eine gewünschte Partikelgröße mittels Walzenbrecher, Stiftmühle, Hammermühle, Schuppwalzen, Stranggranulator (z. B. in Kombination mit einem Wasserbad), anderen Granulatoren oder Ähnlichem.

Gegenstand der Erfindung ist auch die Verwendung der erfindungsgemäßen niedrigviskosen, uretdiongruppenhaltigen Polyadditionsverbindungen in thermoplastischen Polyurethanen (TPU) und Formmassen, Polyurethan-Pulverlacken und PUR-Klebstoffen.

Gegenstand der Erfindung sind auch thermoplastische Polyurethan-Formmassen, wobei die Formmassen niedrigviskose, uretdiongruppenhaltige Polyadditionsverbindungen, erhalten durch lösemittelfreie Umsetzung bei Temperaturen oberhalb von 50 °C von
A) mindestens einem aliphatischen, (cyclo-)aliphatischen und/oder cycloaliphatischen uretdiongrupppenhaltigen Polyisocyanat mit mindestens zwei NCO-Gruppen und
B) mindestens einem monomeren, oligomeren und/oder polymeren Polyol mit mindestens zwei OH-Gruppen;
C) in Gegenwart von organischen Bismutverbindungen der Zusammensetzung RₙBiXₘ (I) in welcher R = Alkylrest mit 1 bis 10 Kohlenstoffatomen und X = Carboxylatrest einer Monocarbonsäure mit 1 bis 20 Kohlenstoffatomen bedeuten und n = 0 - 2; m = 1 - 3 und n + m = 3 ist;
   in einer Konzentration von 0,001 bis 3 % bezogen auf die Gesamtmasse;
D) und optional weitere Monoalkohole, Monoamine, Diamine ausgewählt aus Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin, und/oder Blockierungsmittel;
E) und/oder optional weitere aromatische, aliphatische, (cyclo-)aliphatischen und/oder cycloaliphatische Polyisocyanate;
enthalten, und weitere Polymere, Hilfs- und/oder Zusatzstoffe enthalten sein können.

Dazu können die erfindungsgemäßen uretdiongruppenhaltige Polyadditionsverbindungen mit Polymeren, wahlweise mit Polycarbonaten, Acrylnitril-Copolymerisaten, Acrylnitril-Butadien-Styrol-Polymerisaten, Acrylnitril-Styrol-Acrylkautschuk-Formmassen, Copolymeren aus Ethylen und/oder Propylen sowie Acrylsäure oder Methacrylsäure oder Natrium - oder Zn-Salzen derselben sowie Copolymeren aus Ethylen und/oder Propylen sowie Acrylsäureester oder Methacrylsäureester, und Hilfs- und Zusatzstoffe wie z. B. UV-Stabilisatoren und Antioxidantien vermischt werden.

Die erfindungsgemäßen Formmassen können hergestellt werden indem man das nach im Prinzip bekannten Verfahren hergestellte TPU-Granulat mit den jeweiligen Zuschlagstoffen vermischt und in dem Fachmann bekannter Weise durch Reextrusion kompoundiert. Anschließend kann die erhaltene Formasse granuliert und durch (Kalt-)Mahlen in ein sinterfähiges Pulver überführt werden, das sich z. B. für die Verarbeitung nach dem "Powderslush Verfahren" (siehe z. B. DE 39 32 923 oder auch US 6,057,391) eignet. Solche Pulver weisen bevorzugt Korngrößen von 50 bis 500 µm auf. Die erfindungsgemäßen Formmassen eignen sich zur Herstellung verschiedenster Formkörper, z. B. Folien und/oder Sinterfolien. Die aus den erfindungsgemäßen Polyurethanformmassen hergestellten Folien und/oder Sinterfolien eignen sich Beispielsweise für den Einsatz als Oberflächenverkleidung in Verkehrsmittel, (z. B. Flugzeuge, Autos, Schiffe und Eisenbahnen).

Gegenstand der Erfindung sind auch Polyurethan-Pulverlackzusammenstzungen, im Wesentlichen enthaltend
I. niedrigviskose, uretdiongruppenhaltige Polyadditionsverbindungen, erhalten durch lösemittelfreie Umsetzung bei Temperaturen oberhalb von 50 °C von
   A) mindestens einem aliphatischen, (cyclo-)aliphatischen und/oder cycloaliphatischen uretdiongrupppenhaltigen Polyisocyanat mit mindestens zwei NCO-Gruppen und
   B) mindestens einem monomeren, oligomeren und/oder polymeren Polyol mit mindestens zwei OH-Gruppen;
   C) in Gegenwart von organischen Bismutverbindungen der Zusammensetzung RₙBiXₘ (I) in welcher R = Alkylrest mit 1 bis 10 Kohlenstoffatomen und X = Carboxylatrest einer Monocarbonsäure mit 1 bis 20 Kohlenstoffatomen bedeuten und n = 0 - 2; m = 1 - 3 und n + m = 3 ist;
      in einer Konzentration von 0,001 bis 3 % bezogen auf die Gesamtmasse;
   D) und optional weitere Monoalkohole, Monoamine, Diamine ausgewählt aus Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin, und/oder Blockierungsmittel;
   E) und/oder optional weitere aromatische, aliphatische, (cyclo-)aliphatischen und/oder cycloaliphatische Polyisocyanate;
      wobei weitere Hilfs- und Zusatzstoffe enthalten sein können;
   mit einem Schmelzpunkt von 40 bis 130 °C, einem freien NCO-Gehalt von kleiner 5 Gew.-% und einem Uretdiongehalt von 1 bis 18 Gew.-%;
II. optional ein hydroxylgruppenhaltiges Polymer mit einem Schmelzpunkt von 40 bis 130 °C und einer OH-Zahi zwischen 20 und 200 mg KOH/g;
III. optional Katalysatoren um die Vernetzungsreaktion zu beschleunigen;
IV. optional Säureabfangende Verbindungen;
wobei weitere Hilfs- und Zusatzstoffe enthalten sein können.

Bei den hydroxylgruppenhaltigen Polymeren II. werden bevorzugt Polyester, Polyether, Polyacrylate, Polyurethane und/oder Polycarbonate mit einer OH-Zahl von 20 bis 200 (in mg KOH/g) eingesetzt. Besonders bevorzugt werden Polyester mit einer OH-Zahl von 30 bis 150, einem mittleren Molekulargewicht von 500 bis 6 000 g/mol und einem Schmelzpunkt zwischen 40 und 130°C verwendet. Solche Polyester können amorph oder (teil-)kristallin sein. Solche Bindemittel sind beispielsweise in EP 669 354 und EP 254 152 beschrieben worden. Selbstverständlich können auch Mischungen solcher Polymere eingesetzt werden.

Einsetzbare Katalysatoren III. zur Beschleunigung der Vernetzungsreaktion der uretdiongruppenhaltigen Polyadditionsverbindung mit dem hydroxylgruppenhaltigen Polymeren sind metallorganische Verbindungen wie z. B. Dibutylzinndilaurat (DBTL) aber auch tertiäre Amine wie z. B. 1,4-Diazabicylco[2,2,2,]octan, Diazabicyicloundecen (DBU) und Diazabicyclononen(DBN).

Weitere Katalysatoren III. zur Beschleunigung der Vernetzungsreaktion der uretdiongruppenhaltigen Polyadditionsverbindung mit dem hydroxylgruppenhaltigen Polymeren sind insbesondere Metallacetylacetonate, Metallhydroxide, Metallalkoholate oder quartäre Ammoniumsalze mit Hydroxiden, Fluoriden oder Carboxylaten als Gegenionen. Sie werden z. B. in der WO 00/34355, DE 103 20 267, DE 102 05 608 und DE 103 20 266 beschrieben.

Der Anteil des Katalysators oder der Katalysatormischung an der Gesamtmenge der Pulverlackformulierung beträgt 0,001 bis 3 Massen-%.

Die Aktivität der besonders effizienten Katalysatoren nimmt in Anwesenheit von Säuren deutlich ab. Zu den herkömmlichen Reaktionspartnern uretdiongruppenhaltiger Polyadditionsverbindungen gehören hydroxylgruppenhaltige Polyester. Aufgrund der Herstellungsweise dieser Polyester tragen sie mitunter in geringem Umfang noch Säuregruppen. Der Gehalt der Polyester an Säuregruppen sollte unter 20 mg KOH/g betragen, da sonst die Katalysatoren zu sehr inhibiert werden. In Gegenwart von solchen Säuregruppen tragenden Polyestern bietet es sich an die erwähnten Katalysatoren entweder im Überschuss, bezogen auf die Säuregruppen, zu verwenden, oder aber reaktive Verbindungen zuzusetzen, die in der Lage sind, Säuregruppen abzufangen. Sowohl monofunktionelle als auch mehrfachfunktionelle Verbindungen können hierzu eingesetzt werden.

Reaktive säureabfangende Verbindungen IV) sind in der Lackchemie allgemein bekannt. So setzen sich beispielsweise Epoxyverbindungen, Carbodiimide, Hydroxyalkylamide oder 2-Oxazoline, aber auch anorganische Salze wie Hydroxide, Hydrogencarbonate oder Carbonate mit Säuregruppen bei erhöhten Temperaturen um. In Frage kommen dabei z. B. Triglycidyletherisocyanurat (TGIC), EPIKOTE 828 (Diglycidylether auf Basis Bisphenol A, Schell), Versaticsäureglycidylester, Ethylhexylglycidylether, Butylglycidylether, POLYPOX R 16 (Pentaerythrittetraglycidylether, UPPC AG) sowie ander Polypoxtypen mit freien Epoxygruppen, VESTAGON EP HA 320, (Hydroxyalkylamid, Degussa AG), aber auch Phenylenbisoxazolin, 2-Methyl-2-oxazolin, 2-Hydroxyethyl-2-oxazolin, 2-Hydroxypropyl-2-oxazolin, 5-Hydroxypentyl-2-oxazolin, Natriumcarbonat, Kaliumcarbonat und Calziumcarbonat. Selbstverständlich kommen auch Mischungen solcher Substanzen in Frage. Diese reaktive Verbindungen können in Gewichtsanteilen von 0,1 bis 10 %, bevorzugt von 0,5 bis 3 %, bezogen auf die Gesamtformulierung eingesetzt werden.

Für die Pulverlackherstellung können die in der Pulverlacktechnologie üblichen Hilfs- und Zusatzstoffe, wie Verlaufmittel, z. B. Polysilicone oder Acrylate, Lichtschutzmittel, z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente, wie z. B. Titandioxid, können in einer Menge bis zu 50 Gew.-% der Gesamtzusammensetzung zugesetzt werden.

Außerdem kommen noch die für die PUR-Chemie übliche Katalysatoren in Frage z. B. metallorganische Verbindungen wie z. B. DBTL, aber auch tertiäre Amine wie z. B. 1,4-Diazabicylco[2,2,2,]octan, DBU und DBN.

Weiterer Gegenstand der Erfindung ist ein Verfahren zur Herstellung von Polyurethan-Pulverlackzüsammensetzungen in beheizbaren Aggregaten bei einer Temperaturobergrenze von 120 bis 130 °C.

Die Homogenisierung aller Bestandteile zur Herstellung einer Pulverlackzusammensetzung kann in geeigneten Aggregaten, wie z. B. beheizbaren Knetern, vorzugsweise jedoch durch Extrudieren, erfolgen, wobei Temperaturobergrenzen von 120 bis 130 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, oder elektrostatisches Wirbelsintern erfolgen. Nach dem Pulverauftrag werden die beschichteten Werkstücke zur Aushärtung 4 bis 60 Minuten auf eine Temperatur von 120 bis 220 °C, vorzugsweise 6 bis 30 Minuten bei 120 bis 180 °C, erhitzt.

Gegenstand der Erfindung sind auch Polyurethan-Klebstoffzusammenstzungen, im Wesentlichen enthaltend
I. niedrigviskose, uretdiongruppenhaltige Polyadditionsverbindungen erhalten durch lösemittelfreie Umsetzungen bei Temperaturen oberhalb von 50°C von
   A) mindestens einem aliphatischen, (cyclo-)aliphatischen und/oder cycloaliphatischen uretdiongrupppenhaltigen Polyisocyanat mit mindestens zwei NCO-Gruppen und
   B) mindestens einem monomeren, oligomeren und/oder polymeren Polyol mit mindestens zwei OH-Gruppen;
   C) in Gegenwart von organischen Bismutverbindungen der Zusammensetzung RₙBiXₘ (I) in welcher R = Alkylrest mit 1 bis 10 Kohlenstoffatomen und X = Carboxylatrest einer Monocarbonsäure mit 1 bis 20 Kohlenstoffatomen bedeuten und n = 0 - 2; m = 1 - 3 und n + m = 3 ist;
      in einer Konzentration von 0,001 bis 3 % bezogen auf die Gesamtmasse;
   D) und optional weitere Monoalkohole, Monoamine, Diamine ausgewählt aus Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin, und/oder Blockierungsmittel;
   E) und/oder optional weitere aromatische, aliphatische, (cyclo-)aliphatischen und/oder cycloaliphatische Polyisocyanate;
   wobei weitere Hilfs- und Zusatzstoffe enthalten sein können;
   mit einem freien NCO-Gehalt von kleiner 5 Gew.-% und einem Uretdiongehalt von 1 bis 18 Gew.%;
II. optional ein hydroxylgruppenhaltiges Polymer mit einer OH-Zahl zwischen 20 und 200 mg KOH/g;
III. optional Katalysatoren um die Vernetzungsreaktion zu beschleunigen;
IV. optional säureabfangende Verbindungen;
wobei weitere Hilfs- und Zusatzstoffe enthalten sein können.

Bei den hydroxylgruppenhaltigen Polymeren II, werden bevorzugt Polyester, Polyether, Polyacrylate, Polyurethane und/oder Polycarbonate mit einer OH-Zahl von 20 bis 200 (in mg KOH/g) eingesetzt. Besonders bevorzugt werden Polyester mit einer OH-Zahl von 30 bis 150, einem mittleren Molekulargewicht von 500 bis 6 000 g/mol. Solche Polyester können amorph oder (teil-)kristallin sein. Solche Bindemittel sind beispielsweise in EP 669 354 und EP 254 152 beschrieben worden. Selbstverständlich können auch Mischungen solcher Polymere eingesetzt werden.

Einsetzbare Katalysatoren III. zur Beschleunigung der Vernetzungsreaktion der uretdiongruppenhaltigen Polyadditionsverbindung mit dem hydroxylgruppenhaltigen Polymeren sind metallorganische Verbindungen wie z. B. DBTL, aber auch tertiäre Amine wie z. B. 1,4-Diazabicylco[2,2,2,]octan, DBU und DBN.

Einsetzbare Katalysatoren III. zur Beschleunigung der Vernetzungsreaktion der uretdiongruppenhaltigen Polyadditionsverbindung mit dem hydroxylgruppenhaltigen Polymeren sind besonders Metallacetylacetonate, Metallhydroxide, Metallalkoholate oder quartäre Ammoniumsalze mit Hydroxiden, Fluoriden oder Carboxylaten als Gegenionen. Sie werden z. B. in der WO 00/34355, DE 103 20 267, DE 102 05 608 und DE 103 20 266 beschrieben.

Der Anteil des Katalysators oder der Katalysatormischung an der Gesamtmenge der Klebstoffzusammensetzung beträgt 0,001 bis 3 Massen-%.

Die Aktivität der besonders effizienten Katalysatoren nimmt in Anwesenheit von Säuren deutlich ab. Zu den herkömmlichen Reaktionspartnern uretdiongruppenhaltiger Polyadditionsverbindungen gehören hydroxylgruppenhaltige Polyester. Aufgrund der Herstellungsweise dieser Polyester tragen sie mitunter in geringem Umfang noch Säuregruppen. Der Gehalt der Polyester an Säuregruppen sollte unter 20 mg KOH/g betragen, da sonst die Katalysatoren zu sehr inhibiert werden. In Gegenwart von solchen Säuregruppen tragenden Polyestern bietet es sich an, die erwähnten Katalysatoren entweder im Überschuss, bezogen auf die Säuregruppen, zu verwenden, oder aber reaktive Verbindungen zuzusetzen, die in der Lage sind, Säuregruppen abzufangen. Sowohl monofunktionelle als auch mehrfachfunktionelle Verbindungen können hierzu eingesetzt werden.

Reaktive säureabfangende Verbindungen IV) sind in der Chemie allgemein bekannt. So setzen sich beispielsweise Epoxyverbindungen, Carbodiimide, Hydroxyalkylamide oder 2-Oxazoline, aber auch anorganische Salze wie Hydroxide, Hydrogencarbonate oder Carbonate mit Säuregruppen bei erhöhten Temperaturen um. In Frage kommen dabei z. B. Triglycidyletherisocyanurat (TGIC), EPIKOTE 828 (Diglycidylether auf Basis Bisphenol A, Schell), Versaticsäureglycidylester, Ethylhexylglycidylether, Butylglycidylether, POLYPOX R 16 (Pentaerythrittetraglycidylether, UPPC AG) sowie ander Polypoxtypen mit freien Epoxygruppen, VESTAGON EP HA 320, (Hydroxyalkylamid, Degussa AG), aber auch Phenylenbisoxazolin, 2-Methyl-2-oxazolin, 2-Hydroxyethyl-2-oxazolin, 2-Hydroxypropyl-2-oxazolin, 5-Hydroxypentyl-2-oxazolin, Natriumcarbonat, Kaliumcarbonat und Calziumcarbonat. Selbstverständlich kommen auch Mischungen solcher Substanzen in Frage. Diese reaktive Verbindungen können in Gewichtsanteilen von 0,1 bis 10 %, bevorzugt von 0,5 bis 3 %, bezogen auf die Gesamtformulierung eingesetzt werden.

Für die Klebstoffherstellung können die in der Klebstofftechnologie üblichen Hilfs- und Zusatzstoffe, wie Verlaufmittel, z. B. Polysilicone oder Acrylate, Lichtschutzmittel, z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente, wie z. B. Titandioxid, können in einer Menge bis zu 50 Gew.-% der Gesamtzusammensetzung zugesetzt werden.

Außerdem kommen noch die für die PUR-Chemie üblichen Katalysatoren in Frage z. B. metallorganische Verbindungen wie z. B. DBTL, aber auch tertiäre Amine wie z. B. 1,4-Diazabicylco[2,2,2,]octan, DBU und DBN.

Nachfolgend wird der Gegenstand der Erfindung anhand von Beispielen erläutert.

### Beispiele

| **Einsatzstoffe** | **Produktbeschreibung, Hersteller** |
|---|---|
| IPDI-Uretdion (UD) | Aus IPDI durch Dimerisierung, NCO-Gehalt frei: 17,6 % NCO-Gehalt latent: 20,0 %; DEGUSSA AG |
| Hexandiol | Aldrich |
| DBTL | Dibutylzinndilaurat, Aldrich |
| Coscat 83 | Bismuttris(neo-decanoat) in Neodecansäure, Erbslöh |

### Herstellung eines einer Polyurethanzusammensetzung nach dem erfindungsgemäßen Verfahren

Es wurde mit drei Stoffströmen gearbeitet:
Strom 1 bestand aus Hexandiol,
Strom 2 aus Uretdion des Isophorondiisocyanates (IPDI).
Strom 3 bestand aus dem Katalysator COSCAT 83 bzw. DBTL. Die Gesamtmenge, bezogen auf die Gesamtrezeptur betrug 0,10 % bzw. 0,15 %.
Strom 1 wurde als Schmelze mit einer Menge von 2200 g/h in des erste Gehäuse eines Zweischneckenextruders (DSE 25) eingespeist (Temperatur des Stoffstromes 70 °C).
Strom 2 wurde in das folgende Gehäuse mit einer Menge von 7630 g/h eingespeist (Temperatur des Stoffstromes 80 °C).
Strom 3 wurde vor Eintritt in den Extruder in Strom 2 eingedüst (10 bzw. 15 g/h).

Der eingesetzte Extruder bestand aus 8 Gehäusen, die separat geheizt und gekühlt werden konnten. Gehäuse 1 : 20 - 90°C, Gehäuse 2 - 8: 90 °C.

Alle Temperaturen stellten Soll-Temperaturen dar. Die Regelung erfolgte über Elektroheizung bzw. Wasserkühlung. Die Düse wurde ebenfalls elektrisch beheizt. Die Schneckendrehzahl betrug 250 Upm. Das Reaktionsprodukt wurde auf einem Kühlband abgekühlt und gemahlen.

| | |
|---|---|
| Molverhältnis OH:NCO | 7 : 6 |
| Durchsatz (kg/h) | 3,3 |
| Umdrehungen/Minute | 250 |
| Extrusions Temperatur (°C) | 120 |
| Austrittstemperatur (°C) | 150 |

### Resultate:

| Versuchsnummer | Katalysator | Viskosität (120 °C) [Pas] |
|---|---|---|
| 1 | Coscat 83 (0,1%) | 6600 |
| 2 | Coscat 83 (0,15%) | 7400 |
| 3* | DBTL (0,1%) | 15000 |
| 4* | DBTL (0,15%) | 16000 |

| | | |
|---|---|---|
| *nicht erfindungsgemäße Vergleichsbeispiele | | |

Die erfindungsgemäßen Polyadditionsverbindungen sind deutlich (< 50 %) geringer in ihrer Schmelzviskosität als die Vergleichsbeispiele, die mit DBTL katalysiert worden sind.

## Patentansprüche

1. Niedrigviskose, uretdiongruppenhaltige Polyadditionsverbindungen erhalten durch lösemittelfreie Umsetzung bei Temperaturen oberhalb von 50°C von
A) mindestens einem aliphatischen, (cyclo-)aliphatischen und/oder cycloaliphatischen uretdiongrupppenhaltigen Polyisocyanat mit mindestens zwei NCO-Gruppen und
B) mindestens einem monomeren, oligomeren und/oder polymeren Polyol mit mindestens zwei OH-Gruppen;
C) in Gegenwart von organischen Bismutverbindungen der Zusammensetzung RₙBiXₘ (I)
in welcher R = Alkylrest mit 1 bis 10 Kohlenstoffatomen und X = Carboxylatrest einer Monocarbonsäure mit 1 bis 20 Kohlenstoffatomen bedeuten und n = 0 - 2; m = 1 - 3 und n + m = 3 ist;
in einer Konzentration von 0,001 bis 3 % bezogen auf die Gesamtmasse;
D) und optional weitere Monoalkohole, Monoamine, Diamine ausgewählt aus Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin, und/oder Blockierungsmittel;
E) und/oder optional weitere aromatische, aliphatische, (cyclo-)aliphatischen und/oder cycloaliphatische Polyisocyanate;
wobei weitere Hilfs- und Zusatzstoffe enthalten sein können.

2. Niedrigviskose, uretdiongruppenhaltige Polyadditionsverbindungen nach Anspruch 1, **dadurch gekennzeichnet,**
**dass** als Ausgangstoffe für die uretdiongruppenhaltigen Polyisocanate A) Isophorondiisocyanat (IPDI), Hexamethylendiisocyanat, (HDI), Diisocyanatodicylcohexylmethan (H₁₂MDI) 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) eingesetzt wird.

3. Niedrigviskose, uretdiongruppenhaltige Polyadditionsverbindungen nach Anspruch 2,
**dadurch gekennzeichnet,**
**dass** IPDI, HDI und/oder H₁₂MDI eingesetzt wird.

4. Niedrigviskose, uretdiongruppenhaltige Polyadditionsverbindungen nach mindestens einem der Vorherigen Ansprüche,
**dadurch gekennzeichnet,**
**dass** als Polyole B) Ethylenglykol, Triethylenglykol, Butandiol-1,4, Pentandiol-1,5, Hexandiol-1,6,3-Methylpentandiol-1,5, Neopentylglykol, 2,2,4 (2,4,4)-Trimethylhexandiol, Hydroxypivalinsäureneopentylglykolester, Trimethylolpropan, Ditrimethylolpropan, Trimethylolethan, Hexantriol-1,2,6, Butantriol-1,2,4 Tris(β-Hydroxyethyl)-isocyanurat, Pentaerythrit, Mannit, Sorbit, hydroxylgruppenhaltige Polyester, Polycarbonate, Polycaprolactone, Polyether, Polythioether, Polyesteramide, Polyurethane und/oder Polyacetale, allein oder in Mischungen, eingesetzt werden.

5. Niedrigviskose, uretdiongruppenhaltige Polyadditionsverbindungen nach mindestens einem der vorherigen Ansprüche,
**dadurch gekennzeichnet,**
**dass** als Katalysator C) Bismuttris(neodecanoat) eingesetzt wird.

6. Niedrigviskose, uretdiongruppenhaltige Polyadditionsverbindungen nach mindestens einem der vorherigen Ansprüche,
**dadurch gekennzeichnet,**
**dass** als Verbindungen D) Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanol, Hydroxymethylcyclohexan, Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin, Methylethylketoxim, Acetonoxim, Phenol, ε-Caprolactam, 1,2,4-Triazol, 2,5-Dimethylpyrazol, Malonsäurediethylester, Acetessigsäureethylester, Diisopropylamin, allein oder in Mischungen, eingesetzt werden.

7. Niedrigviskose, uretdiongruppenhaltige Polyadditionsverbindungen nach mindestens einem der vorherigen Ansprüche,
**dadurch** gekennezeichnet,
dass als Komponente E) Isophorondiisocyanat (IPDI), Hexamethylendiisocyanat (HDI), Diisocyanatodicylcohexylmethan (H₁₂MDI) 2-Methylpentandiisocyanat (MPDI), 2,2,4-Trimethylhexamethylendiisocyanat/2,4,4-Trimethylhexamethylendiisocyanat (TMDI), Norbomandiisocyanat (NBDI), Toluidendiisocyanat (TDI), Methylendiphenyldiisocyanat (MDI) und/oder Tetramethylxylylendiisocyanat (TMXDI), allein oder in Mischungen eingesetzt werden.

8. Niedrigviskose, uretdiongruppenhaltige Polyadditonsverbindungen nach Anspruch 7,
**dadurch gekennzeichnet,**
**dass** Isocyanurate, Biurete und/oder Allophanate eingesetzt werden.

9. Verfahren zur lösemittelfreien, kontinuierlichen Herstellung von niedrigviskosen, uretdiongruppenhaltigen Polyadditionsverbindungen erhalten durch lösemittelfreie Umsetzung bei Temperaturen oberhalb von 50 °C von
A) mindestens einem aliphatischen, (cyclo-)aliphatischen und/oder cycloaliphatischen uretdiongrupppenhaltigen Polyisocyanat mit mindestens zwei NCO-Gruppen und
B) mindestens einem monomeren, oligomeren und/oder polymeren Polyol mit mindestens zwei OH-Gruppen;
C) in Gegenwart von organischen Bismutverbindungen der Zusammensetzung RₙBiXₘ (I)
in welcher R = Alkylrest mit 1 bis 10 Kohlenstoffatomen und X = Carboxylatrest einer Monocarbonsäure mit 1 bis 20 Kohlenstoffatomen bedeuten und n = 0 - 2; m = 1 - 3 und n + m = 3 ist;
in einer Konzentration von 0,001 bis 3 % bezogen auf die Gesamtmasse;
D) und optional weitere Monoalkohol, Monoamine, Diamine ausgewählt aus Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin, und/oder Blockierungsmittel;
E) und/oder optional weitere aromatische, aliphatische, (cyclo-)aliphatischen und/oder cycloaliphatische Polyisocyanat;
wobei weitere Hilfs- und Zusatzstoffe enthalten sein können,
in einem Extruder, Strömungsrohr, Intensiv-Kneter, Intensiv-Mischer oder statischen Mischer durch intensive Durchmischung und kurzzeitiger Reaktion bei Wärmezufuhr bei Temperaturen > 50 °C und nachfolgender Isolierung des Endproduktes durch schnelle Abkühlung.

10. Verfahren nach Anspruch 9,
**dadurch gekennzeichnet,**
**dass** die Verweilzeit der Einsatzstoffe 3 Sekunden bis 15 Minuten beträgt.

11. Verfahren nach einem der Ansprüche 9 bis 10
**dadurch gekennzeichnet,**
**dass** die Reaktion im Ein, Zwei- oder Mehrschneckenextruder, Ringextruder oder Planetwalzenextruder erfolgt.

12. Verfahren nach Anspruch 11,
**dadurch gekennzeichnet,**
**dass** die Reaktion in einem Zweischneckenextruder erfolgt.

13. Verfahren nach einem der Ansprüche 9 bis 10,
**dadurch gekennzeichnet**,
das die Reaktion in einem Strömungsrohr, Intensiv-Mischer oder Intensiv-Kneter erfolgt.

14. Verfahren nach einem der Ansprüche 9 bis 10,
**dadurch gekennzeichnet,**
**dass** die Reaktion in einem statischen Mischer erfolgt.

15. Verfahren nach einem der Ansprüche 9 bis 14,
**dadurch gekennzeichnet,**
**dass** die Reaktion in einem Extruder, Intensiv-Kneter, Intensiv-Mischer oder statischen Mischer mit mehreren gleichen oder verschiedenen Gehäusen, die unabhängig voneinander thermisch gesteuert werden können, erfolgt.

16. Verfahren nach einem der Ansprüche 9 bis 15,
**dadurch gekennzeichnet,**
**dass** die Temperatur im Extruder, Intensiv-Kneter, Intensiv-Mischer oder statischen Mischer oberhalb von 50 bis 325 °C beträgt.

17. Verfahren nach einem der Ansprüche 9 bis 16
**dadurch gekennzeichnet,**
**dass** der Extruder oder Intensiv-Kneter durch geeignete Bestückung der Mischkammern und Zusammenstellung der Schneckengeometrie einerseits zu einer intensiven raschen Durchmischung und schnellen Reaktion bei gleichzeitigem intensiven Wärmeaustausch führen, und andererseits eine gleichmäßige Durchströmung in Längsrichtung mit möglichst einheitlicher Verweilzeit bewirken.

18. Verfahren nach einem der Ansprüche 9 bis 17,
**dadurch gekennzeichnet,**
**dass** die Einsatzstoffe und/oder Katalysatoren und/oder Zuschlagstoffe gemeinsam oder in getrennten Produktströmen, in flüssiger oder fester Form, dem Extruder, Strömungsrohr, Intensiv-Kneter, Intensiv-Mischer oder statischen Mischer zugeführt werden.

19. Verfahren nach Anspruch 18,
**dadurch gekennzeichnet,**
**dass** die Zuschlagstoffe gemeinsam mit den Einsatzstoffen zu einem Produktstrom zusammengefasst werden.

20. Verwendung von niedrigviskosen, uretdiongruppenhaltigen Polyadditionsverbindungen nach mindestens einem der Ansprüche 1 bis 8 in thermoplastischen Polyurethanen (TPU) und Formmassen, Polyurethan-Pulverlacken und PUR-Klebstoffen.

21. Thermoplastische Polyurethan-Formmassen, wobei die Formmassen niedrigviskose, uretdiongruppenhaltige Polyadditionsverbindungen, erhalten durch lösemittelfreie Umsetzung bei Temperaturen oberhalb von 50 °C von
A) mindestens einem aliphatischen, (cyclo-)aliphatischen und/oder cycloaliphatischen uretdiongrupppenhaltigen Polyisocyanat mit mindestens zwei NCO-Gruppen und
B) mindestens einem monomeren, oligomeren und/oder polymeren Polyol mit mindestens zwei OH-Gruppen;
C) in Gegenwart von organischen Bismutverbindungen der Zusammensetzung RₙBiXₘ (I)
in welcher R = Alkylrest mit 1 bis 10 Kohlenstoffatomen und X = Carboxylatrest einer Monocarbonsäure mit 1 bis 20 Kohlenstoffatomen bedeuten und n = 0 - 2; m = 1 - 3 und n + m = 3 ist;
in einer Konzentration von 0,001 bis 3 % bezogen auf die Gesamtmasse;
D) und optional weitere Monoalkohole, Monoamine, Diamine ausgewählt aus Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin, und/oder Blockierungsmittel;
E) und/oder optional weitere aromatische, aliphatische, (cyclo-)aliphatischen und/oder cycloaliphatische Polyisocyanate;
enthalten, wobei weitere Polymere, Hilfs- und Zusatzstoffe enthalten sein können.

22. Polyurethan-Pulverlackzusammensetzungen, im Wesentlichen enthaltend
I. niedrigviskose, uretdiongruppenhaltige Polyadditionsverbindungen, erhalten durch lösemittelfreie Umsetzung bei Temperaturen oberhalb von 50 °C von
A) mindestens einem aliphatischen, (cyclo-)aliphatischen und/oder cycloaliphatischen uretdiongrupppenhaltigen Polyisocyanat mit mindestens zwei NCO-Gruppen und
B) mindestens einem monomeren, oligomeren und/oder polymeren Polyol mit mindestens zwei OH-Gruppen;
C) in Gegenwart von organischen Bismutverbindungen der Zusammensetzung RₙBiXₘ (I)
in welcher R = Alkylrest mit 1 bis 10 Kohlenstoffatomen und X = Carboxylatrest einer Monocarbonsäure mit 1 bis 20 Kohlenstoffatomen bedeuten und n = 0 - 2; m = 1 - 3 und n + m = 3 ist;
in einer Konzentration von 0,001 bis 3 % bezogen auf die Gesamtmasse;
D) und optional weitere Monoalkohole, Monoamine, Diamine ausgewählt aus Dimethylamin, Ethylamin, Diethylamin, Propylamin, Dipropylamin, Butylamin, Dibutylamin, Hexylamin, Dihexylamin, Ethylendiamin, Propylendiamin, Butylendiamin, Hexamethylendiamin, und/oder Blockierungsmittel;
E) und/oder optional weitere aromatische, aliphatische, (cyclo-)aliphatischen und/oder cycloaliphatische Polyisocyanate;
wobei weitere Hilfs- und Zusatzstoffe enthalten sein können;
mit einem Schmelzpunkt von 40 bis 130 °C, einem freien NCO-Gehalt von kleiner 5 Gew.-% und einem Uretdiongehalt von 1 bis 18 Gew.-%.
II. optional ein hydroxylgruppenhaltiges Polymer mit einem Schmelzpunkt von 40 bis 130 °C und einer OH-Zahl zwischen 20 und 200 mg KOH/g;
III. optional Katalysatoren um die Vernetzungsreaktion zu beschleunigen;
IV. optional säureabfangende Verbindungen;
wobei weitere Hilfs- und Zusatzstoffe enthalten sein können.

23. Polyurethan-Klebstoffzusammensetzungen, im Wesentlichen enthaltend
I. niedrigviskose, uretdiongruppenhaltige Polyadditionsverbindungen erhalten durch lösemittelfreie Umsetzung bei Temperaturen oberhalb von 50 °C von
A) mindestens einem aliphatischen, (cyclo-)aliphatischen und/oder cycloaliphatischen uretdiongrupppenhaltigen Polyisocyanat mit mindestens zwei NCO-Gruppen und
B) mindestens einem monomeren, oligomeren und/oder polymeren Polyol mit mindestens zwei OH-Gruppen;
C) in Gegenwart von organischen Bismutverbindungen der Zusammensetzung RₙBiXₘ (I)
in welcher R = Alkylrest mit 1 bis 10 Kohlenstoffatomen und X = Carboxylatrest einer Monocarbonsäure mit 1 bis 20 Kohlenstoffatomen bedeuten und n = 0 - 2; m = 1 - 3 und n + m = 3 ist;
in einer Konzentration von 0,001 bis 3 % bezogen auf die Gesamtmasse;
D) und optional weitere Monoalkohole, Monoamine, Diamine ausgewählt aus Dimethylamin, Ethylamin, Diethylamin, Propylamin, Dipropylamin, Butylamin, Dibutylamin, Hexylamin, Dihexylamin Ethylendiamin, Propylendiamin, Butylendiamin, Hexamethylendiamin, und/oder Blockierungsmittel;
E) und/oder optional weitere aromatische, aliphatische, (cyclo-)aliphatischen und/oder cycloaliphatische Polyisocyanate;
wobei weitere Hilfs- und Zusatzstoffe enthalten sein können;
mit einem freien NCO-Gehalt von kleiner 5 Gew.-% und einem Uretdiongehalt von 1 bis 18 Gew.%;
II. optional ein hydroxylgruppenhaltiges Polymer mit einer OH-Zahl zwischen 20 und 200 mg KOH/g;
III. optional Katalysatoren um die Vernetzungsreaktion zu beschleunigen;
IV. optional säureabfangende Verbindungen;
wobei weitere Hilfs- und Zusatzstoffe enthalten sein können.

24. Zusammensetzungen nach mindestens einem der Ansprüche 22 bis 23,
**dadurch gekennzeichnet,**
**dass** als Komponente II. Polyester, Polyether, Polyacrylate, Polyurethane und/oder Polycarbonate mit einer OH-Zahl von 20 bis 200 (in mg KOH/g) eingesetzt werden.

25. Zusammensetzungen nach mindestens einem der Ansprüche 22 bis 24,
**dadurch gekennzeichnet,**
**dass** als Komponente III. DBTL, aber auch tertiäre Amine wie z. B. 1,4-Diazabicyclo[2,2,2,]octan, Diazacicycloundecen (DBU) und Diazabicyclononen (DBN), Metallacetylacetonate, Metallhydroxide, Metallalkoholate oder quartäre Ammoniumsalze mit Hydroxiden, Fluoriden oder Carboxylaten als Gegenionen eingesetzt werden.

26. Zusammensetzungen nach mindestens einem der Ansprüche 22 bis 25,
**dadurch gekennzeichnet,**
**dass** als Komponente IV. Epoxyverbindungen, Carbodiimide, Hydroxyalkylamide oder 2-Oxazoline, organische Salze wie Hydroxide, Hydrogencarbonate oder Carbonate mit Säuregruppen eingesetzt werden.

## Claims

1. Low-viscosity polyaddition compounds containing uretdione groups and obtained by solvent-free reaction at temperatures above 50°C of
A) at least one aliphatic, (cyclo-)aliphatic and/or cycloaliphatic polyisocyanate containing uretdione groups and having at least two NCO groups and
B) at least one monomeric, oligomeric and/or polymeric polyol having at least two OH groups;
C) in the presence of organobismuth compounds of composition RₙBiXₘ (I) in which R = alkyl radical having 1 to 10 carbon atoms and X = carboxylate radical of a monocarboxylic acid having 1 to 20 carbon atoms and n = 0-2; m = 1-3, and n + m = 3;
in a concentration of 0.001 to 3%, based on the total composition;
D) and optionally further monoalcohols, monoamines, diamines selected from dimethylamine, ethylamine, diethylamine, propylamine, dipropylamine, butylamine, dibutylamine, hexylamine, dihexylamine, ethylenediamine, propylenediamine, butylenediamine, hexamethylenediamine, and/or blocking agents;
E) and/or, optionally, further aromatic, aliphatic, (cyclo-)aliphatic and/or cycloaliphatic polyisocyanates;
wherein further auxiliaries and additives may be present.

2. Low-viscosity polyaddition compounds containing uretdione groups according to Claim 1,
**characterized in that**
isophorone diisocyanate (IPDI), hexamethylene diisocyanate (HDI), diisocyanatodicyclohexylmethane (H₁₂MDI), 2-methylpentane diisocyanate (MPDI), 2,2,4-trimethylhexamethylene diisocyanate/2,4,4-trimethylhexamethylene diisocyanate (TMDI), norbomane diisocyanate (NBDI) are used as starting materials for the polyisocyanates A) containing uretdione groups.

3. Low-viscosity polyaddition compounds containing uretdione groups according to Claim 2,
**characterized in that**
IPDI, HDI and/or H₁₂MDI are used.

4. Low-viscosity polyaddition compounds containing uretdione groups according to at least one of the preceding claims,
**characterized in that**
ethylene glycol, triethylene glycol, butane-1,4-diol, pentane-1,5-diol, hexane-1,6-diol, 3-methylpentane-1,5-diol, neopentyl glycol, 2,2,4(2,4,4)-trimethylhexanediol, neopentyl glycol hydroxypivalate, trimethylolpropane, ditrimethylolpropane, trimethylolethane, hexane-1,2,6-triol, butane-1,2,4-triol, tris(β-hydroxyethyl)isocyanurate, pentaerythritol, mannitol, sorbitol, hydroxyl-containing polyesters, polycarbonates, polycaprolactones, polyethers, polythioethers, polyesteramides, polyurethanes and/or polyacetals, alone or in a mixture, are used as polyols B).

5. Low-viscosity polyaddition compounds containing uretdione groups according to at least one of the preceding claims,
**characterized in that**
bismuth tris(neodecanoate) is used as catalyst C).

6. Low-viscosity polyaddition compounds containing uretdione groups according to at least one of the preceding claims,
**characterized in that**
methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n-octadecanol, cyclohexanol, the isomeric methylcyclohexanols, hydroxymethylcyclohexane, dimethylamine, ethylamine, diethylamine, propylamine, dipropylamine, butylamine, dibutylamine, hexylamine, dihexylamine, ethylenediamine, propylenediamine, butylenediamine, hexamethylenediamine, methyl ethyl ketoxime, acetone oxime, phenol, ε-caprolactam, 1,2,4-triazole, 2,5-dimethylpyrazole, diethyl malonate, ethyl acetoacetate, diisopropylamine, alone or in a mixture, are used as compounds D).

7. Low-viscosity polyaddition compounds containing uretdione groups according to at least one of the preceding claims,
**characterized in that**
isophorone diisocyanate (IPDI), hexamethylene diisocyanate (HDI), diisocyanatodicyclohexylmethane (H₁₂MDI), 2-methylpentane diisocyanate (MPDI), 2,2,4-trimethylhexamethylene diisocyanate/2,4,4-trimethylhexamethylene diisocyanate (TMDI), norbomane diisocyanate (NBDI), toluidine diisocyanate (TDI), and/or methylenediphenyl diisocyanate (MDI) and/or tetramethylxylylene diisocyanate (TMXDI), alone or in a mixture, are used as component E).

8. Low-viscosity polyaddition compounds containing uretdione groups according to Claim 7,
**characterized in that** isocyanurates, biurets and/or allophanates are used.

9. Process for solvent-free continuous preparation of low-viscosity polyaddition compounds containing uretdione groups and obtained by solvent-free reaction at temperatures above 50°C of
A) at least one aliphatic, (cyclo-)aliphatic and/or cycloaliphatic polyisocyanate containing uretdione groups and having at least two NCO groups and
B) at least one monomeric, oligomeric and/or polymeric polyol having at least two OH groups;
C) in the presence of organobismuth compounds of composition RₙBiXₘ (I) in which R = alkyl radical having 1 to 10 carbon atoms and X = carboxylate radical of a monocarboxylic acid having 1 to 20 carbon atoms and n = 0-2; m = 1-3, and n + m = 3;
in a concentration of 0.001 to 3%, based on the total composition;
D) and optionally further monoalcohols, monoamines, diamines selected from dimethylamine, ethylamine, diethylamine, propylamine, dipropylamine, butylamine, dibutylamine, hexylamine, dihexylamine, ethylenediamine, propylenediamine, butylenediamine, hexamethylenediamine, and/or blocking agents;
E) and/or, optionally, further aromatic, aliphatic, (cyclo-)aliphatic and/or cycloaliphatic polyisocyanates;
wherein further auxiliaries and additives may be present,
in an extruder, flow tube, intensive compounder, intensive mixer or static mixer by intense commixing and short-duration reaction with heat supply at temperatures > 50°C and subsequent isolation of the end product by rapid cooling.

10. Process according to Claim 9,
**characterized in that**
the residence time of the starting materials is 3 seconds to 15 minutes.

11. Process according to either of Claims 9 and 10,
**characterized in that**
the reaction takes place in a single-screw, twin-screw or multi-screw extruder, annular extruder or planetary roll extruder.

12. Process according to Claim 11,
**characterized in that**
the reaction takes place in a twin-screw extruder.

13. Process according to either of Claims 9 and 10,
**characterized in that**
the reaction takes place in a flow tube, intensive mixer or intensive compounder.

14. Process according to either of Claims 9 and 10,
**characterized in that**
the reaction takes place in a static mixer.

15. Process according to any one of Claims 9 to 14,
**characterized in that**
the reaction takes place in an extruder, intensive compounder, intensive mixer or static mixer having two or more identical or different barrels which can be thermally controlled independently of one another.

16. Process according to any one of Claims 9 to 15,
**characterized in that**
the temperature in the extruder, intensive compounder, intensive mixer or static mixer is above 50 to 325°C.

17. Process according to any one of Claims 9 to 16
**characterized in that**
by appropriate equipping of the mixing chambers and configuration of the screw geometry the extruder or intensive compounder on the one hand leads to an intense and rapid commixing and rapid reaction in conjunction with intense heat exchange and on the other hand brings about uniform flow in the longitudinal direction with an extremely uniform residence time.

18. Process according to any one of Claims 9 to 17,
**characterized in that**
the starting materials and/or catalysts and/or adjuvants are supplied together or in separate product streams, in liquid or solid form, to the extruder, flow tube, intensive compounder, intensive mixer or static mixer.

19. Process according to Claim 18,
**characterized in that**
the adjuvants are combined with the starting materials into one product stream.

20. Use of low-viscosity polyaddition compounds containing uretdione groups according to at least one of Claims 1 to 8 in thermoplastic polyurethanes (TPU) or molding compounds, polyurethane powder coating materials or PU adhesives.

21. Thermoplastic polyurethane molding compounds which contain low-viscosity polyaddition compounds containing uretdione groups and obtained by solvent-free reaction at temperatures above 50°C of
A) at least one aliphatic, (cyclo-)aliphatic and/or cycloaliphatic polyisocyanate containing uretdione groups and having at least two NCO groups and
B) at least one monomeric, oligomeric and/or polymeric polyol having at least two OH groups;
C) in the presence of organobismuth compounds of composition RₙBiXₘ (I) in which R = alkyl radical having 1 to 10 carbon atoms and X = carboxylate radical of a monocarboxylic acid having 1 to 20 carbon atoms and n = 0-2; m = 1-3, and n + m = 3;
in a concentration of 0.001 to 3%, based on the total composition;
D) and optionally further monoalcohols, monoamines, diamines selected from dimethylamine, ethylamine, diethylamine, propylamine, dipropylamine, butylamine, dibutylamine, hexylamine, dihexylamine, ethylenediamine, propylenediamine, butylenediamine, hexamethylenediamine, and/or blocking agents;
E) and/or, optionally, further aromatic, aliphatic, (cyclo-)aliphatic and/or cycloaliphatic polyisocyanates;
wherein further polymers, auxiliaries and additives may be present.

22. Polyurethane powder coating compositions substantially comprising
I. low-viscosity polyaddition compounds containing uretdione groups and obtained by solvent-free reaction at temperatures above 50°C of
A) at least one aliphatic, (cyclo-)aliphatic and/or cycloaliphatic polyisocyanate containing uretdione groups and having at least two NCO groups and
B) at least one monomeric, oligomeric and/or polymeric polyol having at least two OH groups;
C) in the presence of organobismuth compounds of composition RₙBiXₘ (I) in which R = alkyl radical having 1 to 10 carbon atoms and X = carboxylate radical of a monocarboxylic acid having 1 to 20 carbon atoms and n = 0-2; m = 1-3, and n + m = 3;
in a concentration of 0.001 to 3%, based on the total composition;
D) and optionally further monoalcohols, monoamines, diamines selected from dimethylamine, ethylamine, diethylamine, propylamine, dipropylamine, butylamine, dibutylamine, hexylamine, dihexylamine, ethylenediamine, propylenediamine, butylenediamine, hexamethylenediamine, and/or blocking agents;
E) and/or, optionally, further aromatic, aliphatic, (cyclo-)aliphatic and/or cycloaliphatic polyisocyanates;
wherein further auxiliaries and additives may be present;
having a melting point of 40 to 130°C, a free NCO content of less than 5% by weight, and a uretdione content of 1% to 18% by weight;
II. optionally a hydroxyl-containing polymer having a melting point of 40 to 130°C and an OH number of between 20 and 200 mg KOH/g;
III. optionally catalysts for accelerating the crosslinking reaction;
IV. optionally acid scavenger compounds;
**characterized in that** further auxiliaries and additives may be present.

23. Polyurethane adhesive compositions substantially comprising
I. low-viscosity polyaddition compounds containing uretdione groups and obtained by solvent-free reaction at temperatures above 50°C of
A) at least one aliphatic, (cyclo-)aliphatic and/or cycloaliphatic polyisocyanate containing uretdione groups and having at least two NCO groups and
B) at least one monomeric, oligomeric and/or polymeric polyol having at least two OH groups;
C) in the presence of organobismuth compounds of composition RₙBiXₘ (I) in which R = alkyl radical having 1 to 10 carbon atoms and X = carboxylate radical of a monocarboxylic acid having 1 to 20 carbon atoms and n = 0-2; m = 1-3, and n + m = 3;
in a concentration of 0.001 to 3%, based on the total composition;
D) and optionally further monoalcohols, monoamines, diamines selected from dimethylamine, ethylamine, diethylamine, propylamine, dipropylamine, butylamine, dibutylamine, hexylamine, dihexylamine, ethylenediamine, propylenediamine, butylenediamine, hexamethylenediamine, and/or blocking agents;
E) and/or, optionally, further aromatic, aliphatic, (cyclo-)aliphatic and/or cycloaliphatic polyisocyanates;
wherein further auxiliaries and additives may be present;
having a free NCO content of less than 5% by weight, and a uretdione content of 1% to 18% by weight;
II. optionally a hydroxyl-containing polymer having an OH number of between 20 and 200 mg KOH/g;
III. optionally catalysts for accelerating the crosslinking reaction;
IV. optionally acid scavenger compounds;
wherein further auxiliaries and additives may be present.

24. Compositions according to at least one of Claims 22 to 23,
**characterized in that**
polyesters, polyethers, polyacrylates, polyurethanes and/or polycarbonates having an OH number of 20 to 200 (in mg KOH/g) are used as component II.

25. Compositions according to at least one of Claims 22 to 24,
**characterized in that**
DBTL but also tertiary amines such as 1,4-diazabicyclo[2.2.2]octane, diazabicycloundecene (DBU), and diazabicyclononene (DBN), for example, metal acetylacetonates, metal hydroxides, metal alkoxides or quaternary ammonium salts with hydroxide, fluoride or carboxylate counterions are used as component III.

26. Compositions according to at least one of Claims 22 to 25,
**characterized in that**
epoxy compounds, carbodiimides, hydroxyalkylamides or 2-oxazolines, organic salts such as hydroxides, hydrogen carbonates or carbonates with acid groups are used as component IV.

## Revendications

1. Composés de polyaddition peu visqueux, contenant des groupes urétdione, obtenus par mise en réaction sans solvant, à des températures supérieures à 50°C, de
A) au moins un polyisocyanate aliphatique, (cyclo-)aliphatique et/ou cycloaliphatique contenant des groupes urétdione, comportant au moins deux groupes NCO, et
B) au moins un polyol monomère, oligomère et/ou polymère comportant au moins deux groupes OH ;
C) en présence de composés organiques du bismuth, de composition RₙBiXₘ (I)
dans laquelle R représente un groupe alkyle ayant de 1 à 10 atomes de carbone et X représente le reste carboxylate d'un acide monocarboxylique ayant de 1 à 20 atomes de carbone et n = 0-2 ; m = 1-3 et n+m = 3 ;
à une concentration de 0,001 à 3 % par rapport à la masse totale ;
D) et éventuellement encore des monoalcools, des monoamines, diamines, choisies parmi la diméthylamine, l'éthylamine, la diéthylamine, la propylamine, la dipropylamine, la butylamine, la dibutylamine, l'hexylamine, la dihexylamine, l'éthylènediamine, la propylènediamine, la butylènediamine, l'hexaméthylène-diamine, et/ou des agents de blocage ;
E) et/ou éventuellement d'autres polyisocyanates aromatiques, aliphatiques, (cyclo-)aliphatiques et/ou cycloaliphatiques ;
d'autres adjuvants et additifs pouvant être contenus.

2. Composés de polyaddition peu visqueux, contenant des groupes urétdione, selon la revendication 1, **caractérisés en ce que** pour les polyisocyanates A) contenant des groupes urétdione on utilise comme produits de départ l'isophorone-diisocyanate (IPDI), l'hexaméthylène-diisocyanate (HDI), le diisocyanatodicyclohexylméthane (H₁₂MDI) le 2-méthylpentane-diisocyanate (MPDI), le 2,2,4-triméthylhexaméthylène-diisocyanate/2,4,4-triméthylhexaméthylène-diisocyanate (TMDI), le norbornane-diisocyanate (NBDI).

3. Composés de polyaddition peu visqueux, contenant des groupes urétdione, selon la revendication 2, **caractérisés en ce qu'**on utilise l'IPDI, le HDI et/ou le H₁₂MDI.

4. Composés de polyaddition peu visqueux, contenant des groupes urétdione, selon au moins l'une des revendications précédentes, **caractérisés en ce qu'**on utilise comme polyols B) l'éthylèneglycol, le triéthylèneglycol, le butanediol-1,4, le pentanediol-1,5, l'hexanediol-1,6,3-méthylpentanediol-1,5, le néopentylglycol, le 2,2,4 (2,4,4)-triméthylhexanediol, l'hydroxypivalate de néeopentylglycol, le triméthylol-propane, le ditriméthylolpropane, le triméthyloléthane, l'hexanetriol-1,2,6, butanetriol-1,2,4 tris(β-hydroxyéthyl)-isocyanurate, le pentaérythritol, le mannitol, le sorbitol, des polyesters contenant des groupes hydroxy, des polycarbonates, des polycaprolactones, des polyéthers, des polythioéthers, des polyesteramides, des polyuréthannes et/ou polyacétates, seuls ou en mélanges.

5. Composés de polyaddition peu visqueux, contenant des groupes urétdione, selon au moins l'une des revendications précédentes, **caractérisés en ce qu'**on utilise comme catalyseur C) le tris(néodécanoate) de bismuth.

6. Composés de polyaddition peu visqueux, contenant des groupes urétdione, selon au moins l'une des revendications précédentes, **caractérisés en ce qu'**on utilise en tant que composés D) le méthanol, l'éthanol, le n-propanol, l'isopropanol, le n-butanol, l'isobutanol, le sec-butanol, les pentanols, hexanols, octanols et nonanols isomères, le n-décanol, le n-dodécanol, le n-tétradécanol, le n-hexadécanol, le n-octadécanol, le cyclohexanol, les méthylcyclohexanols isomères, l'hydroxyméthylcyclohexane, la diméthylamine, l'éthylamine, la diéthylamine, la propylamine, la dipropylamine, la butylamine, la dibutylamine, l'hexylamine, la dihexylamine, l'éthylènediamine, la propylènediamine, la butylènediamine, l'hexaméthylène-diamine, la méthyléthycétoxime, l'acetonoxime, le phénol, l'e-caprolactame, le 1,2,4-triazole, le 2,5-diméthylpyrazole, le malonate de diéthyle, l'acétoacétate d'éthyle, la diisopropylamine, seuls ou en mélanges.

7. Composés de polyaddition peu visqueux, contenant des groupes urétdione, selon au moins l'une des revendications précédentes, **caractérisés en ce qu'**on utilise en tant que composant E) l'isophorone-diisocyanate (IPDI), l'hexaméthylène-diisocyanate (HDI), le diisocyanatodicyclohexylméthane (H₁₂MDI) le 2-méthylpentane-diisocyanate (MPDI), le 2,2,4-triméthylhexaméthylène-diisocyanate/2,4,4-triméthylhexaméthylène-diisocyanate (TMDI), le norbornane-diisocyanate (NBDI), le toluylène-diisocyanate (TDI), le méthylènediphényl-diisocyanate (MDI) et/ou le tétraméthylxylylène-diisocyanate (TMXDI), seuls ou en mélanges.

8. Composés de polyaddition peu visqueux, contenant des groupes urétdione, selon la revendication 7, **caractérisés en ce qu'**on utilise des isocyanurates, des biurets et/ou des allophanates.

9. Procédé pour la production continue sans solvant de composés de polyaddition peu visqueux, contenant des groupes urétdione, obtenus par mise en réaction sans solvant, à des températures supérieures à 50°C, de
A) au moins un polyisocyanate aliphatique, (cyclo-)aliphatique et/ou cycloaliphatique contenant des groupes urétdione, comportant au moins deux groupes NCO, et
B) au moins un polyol monomère, oligomère et/ou polymère comportant au moins deux groupes OH ;
C) en présence de composés organiques du bismuth, de composition RₙBiXₘ (I)
dans laquelle R représente un groupe alkyle ayant de 1 à 10 atomes de carbone et X représente le reste carboxylate d'un acide monocarboxylique ayant de 1 à 20 atomes de carbone et n = 0-2 ; m = 1-3 et n+m = 3 ;
à une concentration de 0,001 à 3 % par rapport à la masse totale ;
D) et éventuellement encore des monoalcools, des monoamines, diamines, choisies parmi la diméthylamine, l'éthylamine, la diéthylamine, la propylamine, la dipropylamine, la butylamine, la dibutylamine, l'hexylamine, la dihexylamine, l'éthylènediamine, la propylènediamine, la butylènediamine, l'hexaméthylènediamine, et/ou des agents de blocage ;
E) et/ou éventuellement d'autres polyisocyanates aromatiques, aliphatiques, (cyclo-)aliphatiques et/ou cycloaliphatiques ;
d'autres adjuvants et additifs pouvant être contenus,
dans une extrudeuse, un tube à écoulement, un malaxeur intense, un mélangeur intense ou un mélangeur statique, par intense homogénéisation et brève réaction avec apport de chaleur, à des températures > 50°C, et isolement subséquent du produit final par refroidissement rapide.

10. Procédé selon la revendication 9, **caractérisé en ce que** le temps de séjour des produits de départ va de 3 secondes à 15 minutes.

11. Procédé selon l'une quelconque des revendications 9 et 10, **caractérisé en ce que** la réaction est effectuée dans l'extrudeuse monovis, double vis ou à plus grand nombre de vis, l'extrudeuse annulaire ou l'extrudeuse à cylindres planétaires.

12. Procédé selon la revendication 11, **caractérisé en ce que** la réaction s'effectue dans une extrudeuse double vis.

13. Procédé selon l'une quelconque des revendications 9 et 10, **caractérisé en ce que** la réaction s'effectue dans un tube à écoulement, un mélangeur intense ou un malaxeur intense.

14. Procédé selon l'une quelconque des revendications 9 et 10, **caractérisé en ce que** la réaction s'effectue dans un mélangeur statique.

15. Procédé selon l'une quelconque des revendications 9 à 14, **caractérisé en ce que** la réaction s'effectue dans une extrudeuse, un malaxeur intense, un mélangeur intense ou un mélangeur statique à plusieurs corps identiques ou différents, qui peuvent être régulés thermiquement indépendamment les uns des autres.

16. Procédé selon l'une quelconque des revendications 9 à 15, **caractérisé en ce que** la température dans l'extrudeuse, le malaxeur intense, le mélangeur intense ou le mélangeur statique est de plus de 50 à 325°C.

17. Procédé selon l'une quelconque des revendications 9 à 16, **caractérisé en ce que** par disposition convenable des chambres de mélange et conception appropriée de la géométrie des vis, l'extrudeuse ou le malaxeur intense d'une part conduisent à une homogénéisation rapide et intense et à une réaction rapide, avec intense échange thermique simultané, et d'autre part provoquent un écoulement uniforme dans le sens longitudinal, avec un temps de séjour le plus constant possible.

18. Procédé selon l'une quelconque des revendications 9 à 17, **caractérisé en ce que** les produits de départ et/ou les catalyseurs et/ou les additifs sont envoyés conjointement ou en flux de produits séparés, sous forme liquide ou solide, à l'extrudeuse, au tube à écoulement, au malaxeur intense, au mélangeur intense ou au mélangeur statique.

19. Procédé selon la revendication 18, **caractérisé en ce que** les additifs sont réunis conjointement avec les produits de départ en un flux de produits.

20. Utilisation de composés de polyaddition peu visqueux, contenant des groupes urétdione, selon au moins l'une des revendications 1 à 8, dans des polyuréthannes thermoplastiques (TPU) et des matières à mouler, des peintures en poudre polyuréthanne et des adhésifs PUR.

21. Matières à mouler polyuréthanne thermoplastiques, les matières à mouler contenant des composés de polyaddition peu visqueux, contenant des groupes urétdione, obtenus par mise en réaction sans solvant, à des températures supérieures à 50°C, de
A) au moins un polyisocyanate aliphatique, (cyclo-)aliphatique et/ou cycloaliphatique contenant des groupes urétdione, comportant au moins deux groupes NCO, et
B) au moins un polyol monomère, oligomère et/ou polymère comportant au moins deux groupes OH ;
C) en présence de composés organiques du bismuth, de composition RₙBiXₘ (I)
dans laquelle R représente un groupe alkyle ayant de 1 à 10 atomes de carbone et X représente le reste carboxylate d'un acide monocarboxylique ayant de 1 à 20 atomes de carbone et n = 0-2 ; m = 1-3 et n+m = 3 ;
à une concentration de 0,001 à 3 % par rapport à la masse totale ;
D) et éventuellement encore des monoalcools, des monoamines, diamines, choisies parmi la diméthylamine, l'éthylamine, la diéthylamine, la propylamine, la dipropylamine, la butylamine, la dibutylamine, l'hexylamine, la dihexylamine, l'éthylènediamine, la propylènediamine, la butylènediamine, l'hexaméthylènediamine, et/ou des agents de blocage ;
E) et/ou éventuellement d'autres polyisocyanates aromatiques, aliphatiques, (cyclo-)aliphatiques et/ou cycloaliphatiques ;
d'autres polymères, adjuvants et additifs pouvant être contenus.

22. Compositions de peintures en poudre polyuréthanne, contenant essentiellement
I. des composés de polyaddition peu visqueux, contenant des groupes urétdione, obtenus par mise en réaction sans solvant, à des températures supérieures à 50°C, de
A) au moins un polyisocyanate aliphatique, (cyclo-)aliphatique et/ou cycloaliphatique contenant des groupes urétdione, comportant au moins deux groupes NCO, et
B) au moins un polyol monomère, oligomère et/ou polymère comportant au moins deux groupes OH ;
C) en présence de composés organiques du bismuth, de composition RₙBiXₘ (I)
dans laquelle R représente un groupe alkyle ayant de 1 à 10 atomes de carbone et X représente le reste carboxylate d'un acide monocarboxylique ayant de 1 à 20 atomes de carbone et n = 0-2 ; m = 1-3 et n+m = 3 ;
à une concentration de 0,001 à 3 % par rapport à la masse totale ;
D) et éventuellement encore des monoalcools, des monoamines, diamines, choisies parmi la diméthylamine, l'éthylamine, la diéthylamine, la propylamine, la dipropylamine, la butylamine, la dibutylamine, l'hexylamine, la dihexylamine, l'éthylènediamine, la propylènediamine, la butylènediamine, l'hexaméthylènediamine, et/ou des agents de blocage ;
E) et/ou éventuellement d'autres polyisocyanates aromatiques, aliphatiques, (cyclo-)aliphatiques et/ou cycloaliphatiques ;
d'autres adjuvants et additifs pouvant être contenus ;
ayant un point de fusion de 40 à 130°C, une teneur en groupes NCO libres inférieure à 5 % en poids et une teneur en urétdione de 1 à 18 % en poids,
II. éventuellement un polymère contenant des groupes hydroxy, ayant un point de fusion de 40 à 130°C et un indice de groupes OH compris entre 20 et 200 mg de KOH/g ;
III. éventuellement des catalyseurs afin d'accélérer la réaction de réticulation ;
IV. éventuellement des composés capteurs d'acide ;
d'autres adjuvants et additifs pouvant être contenus.

23. Compositions d'adhésifs polyuréthanne, contenant essentiellement
I. des composés de polyaddition peu visqueux, contenant des groupes urétdione, obtenus par mise en réaction sans solvant, à des températures supérieures à 50°C, de
A) au moins un polyisocyanate aliphatique, (cyclo-)aliphatique et/ou cycloaliphatique contenant des groupes urétdione, comportant au moins deux groupes NCO, et
B) au moins un polyol monomère, oligomère et/ou polymère comportant au moins deux groupes OH ;
C) en présence de composés organiques du bismuth, de composition RₙBiXₘ (I)
dans laquelle R représente un groupe alkyle ayant de 1 à 10 atomes de carbone et X représente le reste carboxylate d'un acide monocarboxylique ayant de 1 à 20 atomes de carbone et n = 0-2 ; m = 1-3 et n+m = 3 ;
à une concentration de 0,001 à 3 % par rapport à la masse totale ;
D) et éventuellement encore des monoalcools, des monoamines, diamines, choisies parmi la diméthylamine, l'éthylamine, la diéthylamine, la propylamine, la dipropylamine, la butylamine, la dibutylamine, l'hexylamine, la dihexylamine, l'éthylènediamine, la propylènediamine, la butylènediamine, l'hexaméthylènediamine, et/ou des agents de blocage ;
E) et/ou éventuellement d'autres polyisocyanates aromatiques, aliphatiques, (cyclo-)aliphatiques et/ou cycloaliphatiques ;
d'autres adjuvants et additifs pouvant être contenus ;
ayant une teneur en groupes NCO libres inférieure à 5 % en poids et une teneur en urétdione de 1 à 18 % en poids,
II. éventuellement un polymère contenant des groupes hydroxy, ayant un indice de groupes OH compris entre 20 et 200 mg de KOH/g ;
III. éventuellement des catalyseurs afin d'accélérer la réaction de réticulation ;
IV. éventuellement des composés capteurs d'acide ;
d'autres adjuvants et additifs pouvant être contenus.

24. Compositions selon au moins l'une des revendications 22 et 23, **caractérisées en ce qu'**on utilise comme composant II des polyesters, des polyéthers, des polyacrylates, des polyuréthannes et/ou des polycarbonates ayant un indice de groupes OH de 20 à 200 (en mg de KOH/g).

25. Compositions selon au moins l'une des revendications 22 à 24, **caractérisées en ce qu'**on utilise comme composant III le DBTL (dilaurate de dibutylétain), mais également des amines tertiaires, comme par exemple le 1,4-diazabicyclo[2.2.2]octane, le diazabicyclo-undécène (DBU) et le diazabicyclononène (DBN), des acétylacétonates de métaux, des hydroxydes de métaux, des alcoolates métalliques ou des sels d'ammonium quaternaire avec des hydroxydes, des fluorures ou des carboxylates en tant qu'ions opposés.

26. Compositions selon au moins l'une des revendications 22 à 25, **caractérisées en ce qu'**on utilise comme composant IV des composés époxy, des carbodiimides, des hydroxyalkylamides ou des 2-oxazolines, des sels organiques tels que des hydroxydes, hydrogénocarbonates ou carbonates comportant des groupes acides.
